**Europäisches Patentamt**

**European Patent Office**

**Office européen des brevets**

(19)

(11) Veröffentlichungsnummer: **0 059 705 B1**

(12) ## EUROPÄISCHE PATENTSCHRIFT

(45) Veröffentlichungstag der Patentschrift:
**14.11.84**

(51) Int. Cl.³: **G 03 F 3/08**

(21) Anmeldenummer: **80901769.2**

(22) Anmeldetag: **10.09.80**

(86) Internationale Anmeldenummer:
**PCT/DE 80/00133**

(87) Internationale Veröffentlichungsnummer:
**WO 82/00902 (18.03.82 Gazette 82/8)**

(54) **VERFAHREN UND SCHALTUNGSANORDNUNG ZUR PARTIELLEN KORREKTUR DER ZEICHNUNG BEI DER FARBBILDREPRODUKTION.**

(43) Veröffentlichungstag der Anmeldung:
**15.09.82 Patentblatt 82/37**

(45) Bekanntmachung des Hinweises auf die Patenterteilung:
**14.11.84 Patentblatt 84/46**

(84) Benannte Vertragsstaaten:
**AT CH DE FR GB LI NL SE**

(56) Entgegenhaltungen:
**EP - A - 0 004 078**
**WO - A - 80/02607**
**DE - A - 2 360 270**
**DE - A - 2 607 623**
**DE - A - 3 015 396**
**FR - A - 2 394 114**
**GB - A - 2 032 727**
**US - A - 3 848 856**

(73) Patentinhaber: **DR.-ING. RUDOLF HELL GmbH, Grenzstrasse 1-5, D-2300 Kiel 14 (DE)**

(72) Erfinder: **KLIE, Jürgen, Schulkoppel 12, D-2301 Tökendorf (DE)**
Erfinder: **WELLENDORF, Klaus, Kreitenholt 6, D-2305 Kitzeberg (DE)**

ACTORUM AG

## Beschreibung

Verfahren und Schaltungsanordnung zur partiellen Korrektur der Zeichnung bei der Farbbildeproduktion.

Die Erfindung bezieht sich auf die elektronische Reproduktionstechnik, insbesondere auf die Herstellung vor korrigierten Farbauszügen, und betrifft ein Verfahren zur partiellen Korrektur der Zeichnung sowie eine Schaltungsanordnung zur Durchführung des Verfahrens.

Bei der elektronischen Farbeproduktion werden in einem Farbscanner durch punkt- und zeilenweise optoelektronische Abtastung von farbigen Vorlagen und durch spektrale Farbzerlegung drei primäre Farbmesswertsignale gewonnen, welche die Farbanteile Rot, Grün und Blau der abgetasteten Bildpunkte darstellen. Ein Farbkorrekturrechner korrigiert die Farbmesswertsignale nach den Gesetzmässigkeiten der subtraktiven Farbmischung und erzeugt die Farbauszugssignale, welche ein Mass für die im späteren Druck erforderlichen Druchfarbmengen sind.

Die Farbauszugssignale werden als digitale Farbwerte in einem Speichermedium abgelegt, um die Farbauszüge gegebenenfalls zu einem späteren Zeitpunkt oder an einem anderen Ort aufzuzeichnen oder aber, um die Farbwerte verschiedener Einzelvorlagen nach einem Layout-Plan zu einer Datenmenge zu vereinigen, die einer Gesamtseite entspricht.

Zur Aufzeichnung der Farbauszüge werden die Farbwerte der Einzelvorlagen oder der Gesamtseite aus dem Speichermedium ausgelesen, in analoge Farbauszugssignale zurückgewandelt und Schreiblampen als Aufzeichnungsorganen zugeführt, deren Helligkeiten durch die zugehörigen Farbauszugssignale moduliert werden. Die Schreiblampen belichten punkt- und zeilenweise ein Aufzeichnungsmedium in Form von Filmen, welche nach der Entwicklung die gewünschten gerasterten oder ungerasterten Farbauszüge Gelb, Magenta, Cyan und Schwarz zur Herstellung von Druckformen darstellen.

In dem Reproduktionsprozess werden häufig nachträglich partielle Retuschen (Farb- und/oder Tonwertkorrekturen) notwendig, sei es, um die in dem Farbkorrekturrechner erfolgte Korrektur zu optimieren oder aber um redaktionelle Änderungen und Kundenwünsche zu berücksichtigen. Während die durch den Farbkorrekturrechner vorgenommene Korrektur einer Farbe überall dort wirksam ist, wo diese Farbe in der Vorlage oder in dem zu reproduzierenden Bild auftritt, ist es wünschenswert, eine derartige Retusche auf wählbare, örtlich begrenzte Bildbereiche zu beschränken. Hinzu kommt, dass der Korrektureinfluss innerhalb der zu retuschierenden Bilereiche häufig auch verlaufend, d.h. allmählich zunehmend oder abnehmend, sein soll.

Eine typische Retuschearbeit, die im Farbauszug durchgeführt, wird ist die partielle Verbesserung der Zeichnung d.h. das Herausarbeiten feinerer Tonwertabstufungen.

Diese Retuschearbeit ist aufwendig und zeitraubend und setzt grosse Erfahrung voraus, wenn eine verlaufende Zeichnung innerhalb der zu retuschierenden Bildfläche erzielt werden soll.

Aus der DE-A Nr. 2430762 ist bereits ein Verfahren bekannt, mit dem nachträgliche Farbkorrekturen in ausgewählten Bildbereichen durch Ändern der gespeicherten Bildinformationen durchgeführt werden können. Mittels eines Koordinatenerfassungsgerätes ermittelt eine Bedienungsperson die Koordinaten der zu korrigierenden Bildpunkte in dem Bild, wodurch der adressenmässige Zugriff zu den gespeicherten Bildinformationen geschaffen wird. Die Bedienungsperson gibt dann die gewünschten Korrekturbeträge über die Tasten einer Bedienungseinheit in einen Rechner ein, der die gespeicherten Bildinformationen durch Bewertung mit multiplikativen oder additiven Grössen in die geänderten Bildinformationen umrechnet.

Mit dem bekannten Verfahren können zwar durch Eingabe von einzelnen Korrekturbeträgen Farbkorrekturen erzielt werden, doch ein Verfahren, mit dem eine feinere Tonwertabstufung zur Verbesserung der Zeichnung in einem Bild durchgeführt werden kann, wird nicht angegeben.

Ausserdem dürfte das bekannte Verfahren kaum geeignet sein, die in der Praxis häufig gewünschten verlaufenden Retuschen mit allmählich ansteigendem oder abfallendem Einfluss zu erzeugen, was als erheblicher Nachteil angesehen wird. Hinzu kommt, dass die Offenlegungsschrift nicht offenbart, wie das beschriebene Verfahren im einzelnen durchgeführt werden soll.

*Offenbarung der Erfindung*

Aufgabe der Erfindung ist es daher, ein Verfahren und eine Schaltungsanordnung zur Korrektur der Zeichnung bei der Farbbildreproduktion anzugeben, mit denen insbesondere verlaufende Korrekturen oder Retuschen durchführbar sind.

Die Aufgabe wird erfindungsgemäss dadurch gelöst, dass für die Farbwerte $(Y,M,C,K)$ eines zu retuschierenden Farbauszuges bildpunktweise ortsabhängige Korrekturwerte $(Y_R,M_R,C_R,K_R)$ aus den bildpunktmässig zugeordneten Farbwerten $(Y,M,C,K)$ mindestens eines nicht zu retuschierenden Farbauszuges durch freie Wahl von Anteilsfaktoren $a_F$ abgeleitet werden und dass die zu korrigierenden Farbwerte $(Y,M,C,K,)$ des zu retuschierenden Farbauszuges durch die ortsmässig zugeordneten Korrekturwerte $(Y_R,M_R,C_R,K_R)$ geändert werden, um die korrigierten Farbwerte $(Y',M',C',K')$ zu erhalten.

In vorteilhafter Weise werden bildpunktweise aus wählbaren Anteilen der Farbwerte $(Y,M,C,K)$ mindestens eines nicht zu retuschierenden Farbauszuges ortsabhängige Farbinkremente $(Y,M,C,K)$ abgeleitet, welche jeweils den kleinstein Änderungsbetrag für den zu korrigierenden Farbwert $(Y,M,C,K)$ eines Bildpunktes im zu retuschierenden Farbauszug darstellt. Die Bildpunktkoordinaten $(x,y)$ der zu korrigierenden Farbwerte $(Y,M,C,K)$ werden erfasst und zur Bestimmung der jeweiligen Korrekturstärke zu jedem erfassten Koordinatenpaar $(x,y)$ ein Retuschefaktor $(r)$ ermittelt, welcher für jeden Korrekturwert ($Y_R,M_R,C_R,K_R$) die Anzahl der zu summierenden Farbinkremente ($\Delta Y,\Delta M,\Delta C,\Delta K$) angibt. Bildpunktmässig zugehörige Retuschefaktoren (r) und Farbinkremente ($\Delta Y,\Delta M,\Delta C,\Delta K$) werden miteinander multipliziert, um die Korrekturwerte ($Y_R,M_R,C_R,K_R$) zu erhalten.

Vorzugsweise ist vorgesehen, dass die digitalen Farbwerte (Y,M,C,K) aus dem Speichermedium (1) ausgelesen, durch die Korrekturwerte ($Y_R$, $M_R$, $C_R$, $K_R$) geändert und die korrigierten Farbwerte (Y', M', C', K') nach beendeter Retusche wieder auf dem Speichermedium abgelegt werden.

In bevorzugter Weise werden die Bildpunktkoordinaten (x, y) der zu korrigierenden Farbwerte (Y, M, C, K) in einem Koordinatenerfassungsgerät (50, 51, 52) durch Markieren der ortsmässig zugeordneten Punkte mit einer Markiervorrichtung (51), insbesondere mit einem Koordinatenstift, ermittelt.

In einer vorteilhaften Ausführungsform wird vorgeschlagen, dass die Retuschefaktoren (r) aus der Anzahl von Berührungen der entsprechenden Punkte mit der Markiervorrichtung (51) des Koordinatenerfassungsgerätes (50, 51, 52) ermittelt werden, wobei die Markiervorrichtung (51) wie ein Retuschepinsel über den Bereich des Koordinatenerfassungsgerätes (50, 51, 52) geführt wird, der dem zu korrigierenden Bereich des Farbauszugs entspricht. Alternativ werden die Retuschefaktoren (r) aus dem Druck der Markiervorrichtung (51) auf die entsprechenden Punkte des Koordinatenerfassungsgerätes (50, 51, 52) ermittelt.

Eine andere Alternative sieht vor, dass die Retuschefaktoren (r) aus der Verweildauer der Markiervorrichtung (51) auf den entsprechenden Punkten des Koordinatenerfassungsgerätes (50, 51, 52) ermittelt werden.

Die Retuschefaktoren (r) werden mit jeder Berührung um einen Betrag erhöht (Verstärkung der Retusche) oder erniedrigt (Rücknahme der Retusche), bzw. bei einem Druckanstieg erhöht und bei einem Druckabfall erniedrigt, bzw. entsprechend der jeweiligen Verweildauer um einen Betrag erhöht oder erniedrigt.

In vorteilhafter Weise wird der unretuschierte oder retuschierte Farbauszug bzw. das unretuschierte oder retuschierte Farbbild (Original) zur Sichtkontrolle auf einem Monitor (2) dargestellt, in den Bildschirm (3) eine verschiebbare Lichtmarke (31) eingeblendet und die Bewegung der Lichtmarke (31) mit der Bewegung der Markiervorrichtung (51) des Koordinatenerfassungsgerätes (50, 51, 52) synchronisiert.

Bevorzugterweise werden die digitalen Farbwerte (Y, M, C, K) der einzelnen Farbauszüge aus dem Speichermedium (1) in einen Bildwiederholspeicher (7) geladen und der Bildwiederholspeicher (7) zur punktweisen Aufzeichnung auf dem Monitor (2) zyklisch ausgelesen.

Vorgesehen ist, dass die ermittelten Retuschefaktoren (r) bildpunktweise in einen Retuschespeicher (49) überschrieben werden und dass der Retuschespeicher (49) zur bildpunktmässigen Zuordnung von Farbwerten (Y, M, C, K) und Korrekturwerten ($Y_R$, $M_R$, $C_R$, $K_R$) synchron mit dem Bildwiederholspeicher (7) ausgelesen wird.

Eine vorteilhafte Verbesserung ist, dass die durch den Korrekturvorgang geänderten Retuschefaktoren (r) jeweils in einer Austastlücke der Bildaufzeichnung in den Retuschespeicher (49) überschrieben werden.

Bevorzugter weise werden die Bildpunktkoordinaten (x, y) der markierten Punkte in der Reihenfolge ihrer Erfassung listenmässig abgelegt, die Bildpunktkoordinaten (x, y) paarweise in umgekehrter Reihenfolge aufgerufen und die entsprechenden Retuschefaktoren (r) in dem Retuschespeicher (49) schrittweise geändert, um die erfolgte Retusche schrittweise und konturengenau rückgängig zu machen.

Eine weitere Verbesserung besteht darin, dass die gesamte Korrektur durch Löschen der Retuschespeichers (49) rückgängig gemacht wird.

Eine vorteilhafte Weiterbildung sieht vor, dass die Markiervorrichtung (51) gleichzeitig die Bildpunktkoordinaten (x, y) mehrerer zu korrigierender Farbwerte (Y, M, C, K) erfasst und dass diese Farbwerte entsprechend einer vergrösserten Pinselfläche gleichzeitig geändert werden.

Die vergrösserte Pinselfläche wird bevorzugterweise durch eine entsprechend vergrösserte Lichtmarke (31) angezeigt.

Zur weiteren Verbesserung wird vorgeschlagen, den zu retuschierenden Bildbereich durch eine elektronisch erzeugte Maske zu begrenzen.

Eine vorteilhafte Anordnung zur Durchführung des Verfahrens besteht aus einem Farbgeber (38) zur Bildung der Farbinkremente ($\Delta Y, \Delta M, \Delta C, \Delta K$), einem Retuschegeber (39) zur Bildung der Retuschefaktoren (r) für die zu korrigierenden Farbwerte (Y, M, C, K), einem mit dem Farbgeber (38) und dem Retuschegeber (39) verbundenen Korrekturwertgeber (40) zur Bildung der Korrekturwerte ($Y_R$, $M_R$, $C_R$, $K_R$), einer Ansteuerung (42) des Korrekturwertgebers für mindestens einen nicht zu retuschierenden Farbauszug und einer Ansteuerung (41) des Korrekturwertgebers für einen zu retuschierenden Farbauszug, und aus dem Bildwiederholspeicher (7) nachgeschalteten Verknüpfungsstufen (15, 16, 17, 18) in den Farbkanälen zur Änderung der Farbwerte durch die Korrekturwerte.

Der Retuschegeber (39) ist in bevorzugter Weise aus einem Koordinatenerfassungsgerät (50, 51, 52) zur Ermittlung der Bildpunktkoordinaten (x, y) der zu korrigierenden Farbwerte, aus einer mit dem Koordinatenerfassungsgerät (50, 51, 52) verbundenen Auswerteschaltung (48) zur Bildung der Retuschefaktoren (r) für jedes erfasste Bildpunktkoordinatenpaar und aus einem mit der Auswerteschaltung (48) verbundenen Retuschespeicher (49) aufgebaut.

Die Erfindung wird im folgenden anhand der Fig. 1 bis 6 näher erläutert. Es zeigen:

Fig. 1    eine Schaltungsanordnung zur partiellen elektronischen Retusche bei der Farbbildreproduktion;

Fig. 2    grafische Darstellungen zur Ermittlung der Retuschefaktoren;

Fig. 3 eine mit dem Koordinatenstift erfasste Retuschefläche;

Fig. 4 ein Ausführungsbeispiel für ein Speichersteuerwerk;

Fig. 5 ein Ausführungsbeispiel für einen Farbgeber, und

Fig. 6 ein Ausführungsbeispiel für eine Korrekturwertstufe.

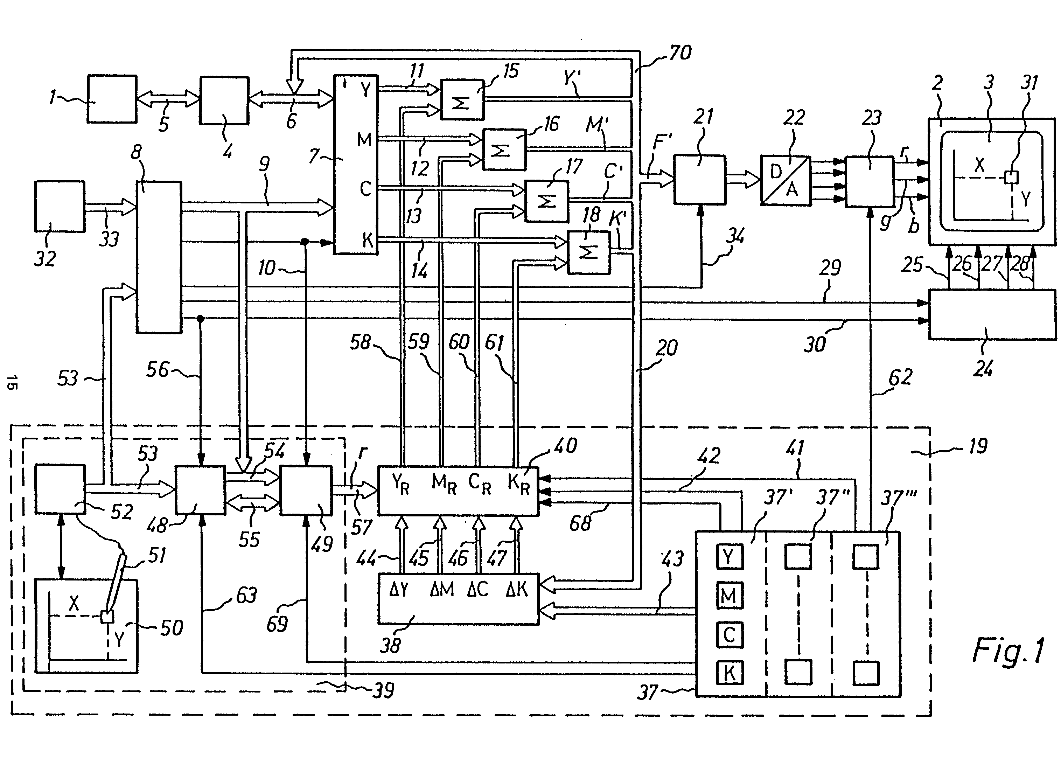

Fig. 1 zeigt den prinzipiellen Aufbau einer Schaltungsanordnung zur partiellen elektronischen Retusche (Retuscheplatz) bei der Farbbildreproduktion.

Ein Speichermedium 1 (Magnetband, Magnetplatte) enthält im Ausführungsbeispiel die bereits in einem Farbscanner korrigierten digitalen Farbwerte für die Farbauszüge Gelb (Y), Magenta (M), Cyan (C) und Schwarz (K) eines zu reproduzierenden Bildes.

Die Farbwerte mögen beispielsweise eine Wortlänge von 8 bit haben, womit zwischen Schwarz (0) und Weiss (255) 254 Graustufen unterschieden werden.

Das zu reproduzierende Bild kann sowohl ein Einzelbild als auch eine montierte Druckseite sein. Die Farbwerte eines Einzelbildes wurden zuvor in einem Farbscanner durch punkt- und zeilenweise trichromatische Abtastung einer Vorlage, durch Farbkorrektur und Analog-Digital-Wandlung der Farbauszugssignale gewonnen. Die Farbwerte einer ganzen Druckseite entstanden beispielsweise in einer Einrichtung zur elektronischen Seitenmontage nach der GB-A Nr. 1407487 (DE-A Nr. 2161038) durch Kombination der korrigierten Einzelbildfarbwerte nach einem Layout-Plan. In dem Speichermedium 1 können aber auch unkorrigierte Farbwerte abgelegt sein.

Vor der Aufzeichnung der Farbauszüge auf Filmmaterial mittels eines Farbscanners (Offsetdruck) oder vor der Herstellung der Druckformen mittels einer Graviermaschine (Tiefdruck) sollen die zu reproduzierenden Bilder bzw. Farbwerte unter Sichtkontrolle einer partiellen elektronischen Retusche unterzogen werden, um generell die Zeichnung zu verbessern und/oder um nachträgliche Änderungswünsche der Auftraggeber zu berücksichtigen.

Für die Sichtkontrolle ist ein Farbmonitor 2 vorhanden, auf dessen Bildschirm 3 ein Bild aus 512 × 512 Bildpunkten aufgezeichnet werden kann. Die zur Darstellung eines zu retuschierenden Farbauszuges oder des Farbbildes benötigten Farbwerte werden mittels eines Prozessrechners 4 aus dem gesamten Datenbestand des Speichermediums 1 ausgewählt oder berechnet und von dort Bildpunkt für Bildpunkt über die Datenbusse 5 und 6 in einen Bildwiederholspeicher 7 übertragen. Der Bildwiederholspeicher 7 weist dementsprechend für jeden Farbauszug eine Kapazität von 512 × 512 Speicherplätzen à 8 bit auf.

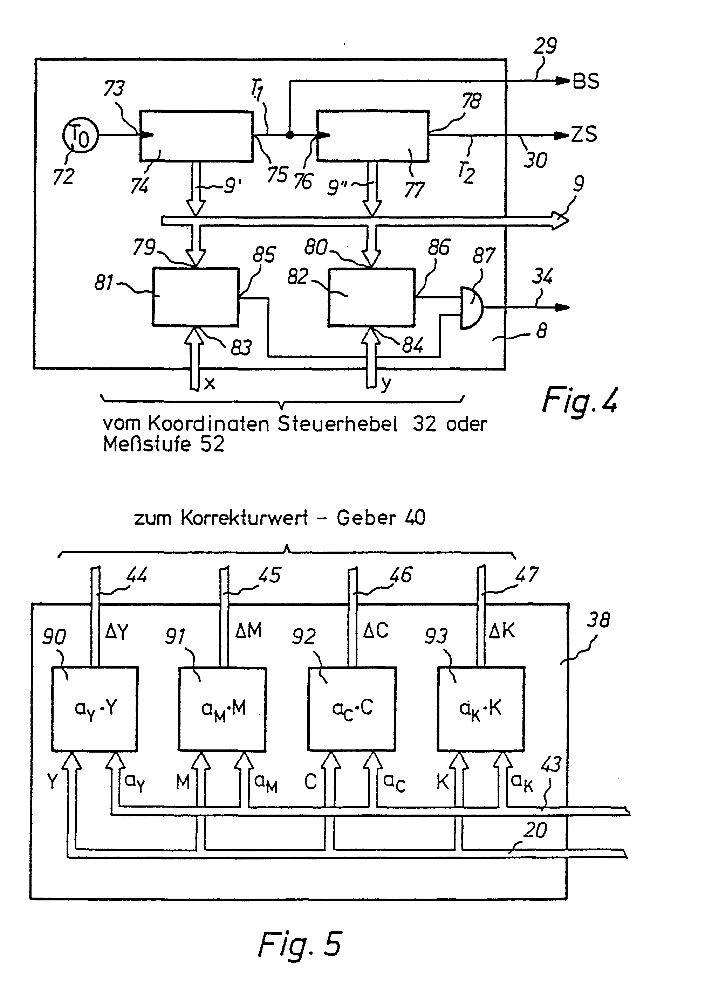

Zur Erzeugung eines Standbildes auf dem Bildschirm 3 des Farbmonitors 2 ruft ein Speichersteuerwerk 8 über einen Adressbus 9 die XY-Adressen des Bildwiederholspeichers 7 zyklisch auf. Fig. 4 zeigt ein Ausführungsbeispiel für ein Speichersteuerwerk.

Die gespeicherten digitalen Farbwerte F (Y, M, C, K) werden mit einem Lesetakt auf einer Leitung 10 Zeile für Zeile und innerhalb jeder Zeile Bildpunkt für Bildpunkt ausgelesen und über Datenleitungen 11, 12, 13 und 14 auf digitale Verknüpfungsstufen 15, 16, 17 und 18 gegeben, die im Ausführungsbeispiel als digitale Addierstufen ausgebildet sind.

In den digitalen Addierstufen 15, 16, 17 und 18 werden den ausgelesenen digitalen Farbwerten F ortsmässig zugeordnete Korrekturwerte $F_R$ ($Y_R$, $M_R$, $C_R$, $K_R$) hinzugefügt, um die retuschierten digitalen Farbwerte F' (Y', M', C', K') zu erhalten, wobei durch Erhöhung der Korrekturwerte eine Zeichnungsverstärkung und durch Erniedrigung der Korrekturwerte eine Zeichnungsrücknahme erreicht werden.

Die Korrekturwerte $F_R$ werden in einer Korrekturschaltung 19 erzeugt.

Die retuschierten digitalen Farbwerte F' gelangen über einen Datenbus 20 und einen Lichtmarkengenerator 21 auf einen D/A-Wandler 22 und werden dort in vier analoge Farbauszugssignale umgewandelt. Ein nachgeschalteter Drucknachbildungsrechner 23 formt die vier Farbauszugssignale unter Berücksichtigung der Parameter des späteren Mehrfarbendruckes derart in die drei Ansteuersignale r, g und b für den Farbmonitor 2 um, dass die Darstellung auf dem Bildschirm 3 denselben farblichen Eindruck vermittelt wie der Mehrfarbendruck selbst. Ein derartiger Drucknachbildungsrechner ist z.B. ausführlich in der GB-A Nr. 1540525 (DE-A Nr. 2607623) beschrieben.

Die Aufzeichnung erfolgt nach dem Zeilensprungverfahren, um ein flimmerfreies Bild zu erhalten. Ein Taktgenerator 24 erzeugt nach der beim Fernsehen üblichen Technik die zur Bildaufzeichnung benötigten horizontalen und vertikalen Ablenksignale auf Leitungen 25 und 26 und die Zeilenstartimpulse und Bildstartimpulse auf Leitungen 27 und 28. Das Speichersteuerwerk 8 liefert über die Leitung 29 und 30 horizontale und vertikale Synchronimpulse an den Taktgenerator 24, so dass die Bildaufzeichnung mit dem Lesevorgang aus dem Bildwiederholspeicher 7 synchronisiert ist.

Zur Markierung eines Bildpunktes oder Bildpunktbereiches in dem dargestellten Bild wird eine Lichtmarke 31 in den Bildschirm 3 eingeblendet, die sich durch Vorgabe von X/Y-Koordinaten mittels eines mechanischen Koordinatensteuerhebels 32 über eine Adressenleitung 33 verschieben lässt. In dem Speichersteuerwerk 8 werden die vorgegebenen Koordinaten (Adressen) mit den laufend aufgerufenen Adressen verglichen und bei Gleichheit ein Befehl „Lichtmarke" auf einer Leitung 34 erzeugt, der genau in dem Zeitpunkt erscheint, in dem die Elektronenstrahlen des Farbmonitors 2 den gewählten Bildpunkt oder Bildpunktbereich auf der Bildschirmfläche überstreichen. Der Befehl „Lichtmarke" aktiviert den Lichtmarkengenerator 21, der kurzeitig wertgleiche r-, g-, b-Ansteuersignale für den Farbmonitor 2 erzeugt. Dadurch werden die Elektronenstrahlerzeugungssysteme des Farbmonitors 2 gleichzeitig mit derselben Leuchtdichte eingeschaltet und die weisse Lichtmarke 31 erzeugt.

Im folgenden soll die Korrekturschaltung 19, die im wesentlichen aus einer Eingabestufe 37, einem Farbgeber 38, einem Retuschegeber 39 und einem Korrekturwertgeber 40 besteht, beschrieben werden.

In einem zu retuschierenden Farbauszug ist der ortsabhängige Korrekturfaktor $F_R$ (x, y) für jeden Bildpunkt mit den Koordinaten x und y durch die allgemeine Gleichung I oder für die einzelnen Farbanszüge durch die Gleichungen II gegeben:

$$F_R (x, y) = \Delta F (x, y) \cdot r (x, y) \quad (I)$$
$$Y_R (x, y) = \Delta Y (x, y) \cdot r (x, y)$$

$$M_R (x, y) = \Delta M (x, y) \cdot r (x, y) \quad (II)$$
$$C_R (x, y) = \Delta C (x, y) \cdot r (x, y)$$
$$K_R (x, y) = \Delta K (x, y) \cdot r (x, y)$$

In den Gleichungen ist $\Delta F \cdot (\Delta Y; \Delta M; \Delta C; \Delta K)$ ein orts- bzw. bildpunktabhängiges Farbinkrement, welches den jeweils kleinsten Änderungsbetrag für die Farbwerte F darstellt.

Die Farbinkremente $\Delta F$ sind nach der Beziehung:

$$\Delta F (x, y) = F (x, y) \cdot a_F \quad (III)$$

orts- und anteilmässig von den Farbwerten F mindestens eines nicht zu retuschierenden Farbauszuges abhängig, wobei $a_F$ frei wählbare Anteilsfaktoren sind. Die Farbinkremente $\Delta F$ werden in dem Farbgeber 38 gewonnen.

In den Gleichungen ist r ein allen Farbauszügen gemeinsamer, ortsabhängiger als Retuschefaktor bezeichneter Multiplikator, mit dem das betreffende Farbinkrement $\Delta F$ zu multiplizieren ist, um den Korrekturwert $F_R$ zu erhalten. Die Retuschefaktoren r werden in dem Retuschegeber 39 erzeugt.

Die einzelnen Komponenten der Korrekturschaltung 19 sollen nun näher beschrieben werden.

## Eingabestufe 37

Die Eingabestufe 37 weist drei Tastenfelder 37', 37" und 37''' auf, wobei im Tastenfeld 37' vier Farbauszugstasten Y, M, C und K vorhanden sind.

Mit Hilfe dieser Farbauszugstasten wird derjenige Farbauszug (zu retuschierender Farbauszug), dessen Zeichnung korrigiert werden soll, und der oder diejenigen Farbauszüge (Farbinkrement bestimmender Farbauszug) ausgewählt, in deren Abhängigkeit die Korrektur erfolgen soll.

Für die Auswahl des zu retuschierenden Farbauszugs gelangt ein entsprechender Befehl über eine Leitung 41 an den Korrekturwertgeber 40. Dieser Befehl sorgt dafür, dass von dem Korrekturwertgeber 40 nur die Korrekturwerte $F_R$ für den zu retuschierenden Farbauszug an die betreffenden Addierstufen 15, 16, 17 oder 18 durchgeschaltet werden, während alle übrigen Korrekturwerte Null sind.

Für die Auswahl der Farbauszüge, welche die Farbinkremente $\Delta F$ bestimmen sollen, geht ein Befehl über eine Leitung 42 an den Korrekturwertgeber 40, mit dem die entsprechenden, über die Datenleitungen 44 bis 47 ankommenden Farbinkremente ausgewählt werden.

Im Tastenfeld 37" ist eine Zehner-Tastatur vorhanden, mit welcher die Anteilsfaktoren eingegeben werden. Die Anteilsfaktoren $a_F$ werden über den Datenbus 43 an den Farbgeber 38 übermittelt.

Das Tastenfeld 37''' weist eine Vielzahl von Betriebstasten auf, mit denen verschiedene Funktionen der Korrekturschaltung 19 aktiviert werden können.

## Farbgeber 38

In dem Farbgeber 38 werden bildpunktweise die Farbinkremente $\Delta F$ für den zu retuschierenden Farbauszug gemäss der angegebenen Gleichung $\Delta F (x, y) = F (x, y) \cdot a_F$ aus den gewählten Anteilsfaktoren $a_F$ und aus den über den Datenbus 20 ankommenden Farbwerten F der ortsmässig zugeordneten Bildpunkte der die Farbinkremente bestimmenden unkorrigierten Farbauszüge berechnet.

Die Farbinkremente $\Delta F$ werden über die Datenleitungen 44 bis 47 an den Korrekturwertgeber 40 weitergeleitet. Ein Ausführungsbeispiel des Farbgebers 38 zeigt Fig. 5.

## Retuschegeber 39

Der Retuschegeber 39 umfasst ein Koordinatenerfassungsgerät für die Bildpunktkoordinaten (x, y) der zu retuschierenden Farbwerte, eine Auswerteschaltung 48 zur Berechnung der ortsabhängigen Retuschefaktoren r (x, y) und einen Retuschespeicher 49.

Das Koordinatenerfassungsgerät besteht im Ausführungsbeispiel aus einem Digitalisiertablett 50, einem handgeführten Koordinatenstift 51 oder irgendeiner anderen Markiervorrichtung und einer Messstufe 52 zur Koordinatenbestimmung der von dem Koordinatenstift 51 erfassten Punkte auf dem Digitalisiertablett 50.

Derartige Koordinatenerfassungsgeräte sind im Handel erhältlich (z.B. Fa. Summagraphics, 35 Brentwood Ave., Fairfield, USA) und dem Fachmann bekannt, so dass sich eine detaillierte Beschreibung erübrigt.

Es kann aber auch jedes andere Koordinatenerfassungsgerät (z.B. Koordinatenhebel, Rollkugel usw.) oder, falls eine geringe Genauigkeit zulässig ist, auch ein herkömmlicher Lichtgriffel Verwendung finden.

Bei dem Koordinatenerfassungsgerät des Ausführungsbeispiels werden die Bildpunktkoordinaten mit einer wesentlich höheren Auflösung ermittelt als die Auflösung des gespeicherten und dargestellten Bildes aus 512 × 512 Bildpunkten, wodurch eine hohe Genauigkeit erzielbar ist. Die im Koordinatenerfassungsgerät gemessenen Bildpunktkoordinaten werden in der Messstufe 52 auf die möglichen 512 × 512 Koordinaten (= Adressen) umgerechnet und über einen Adressbus 53 ausgegeben.

Für die Kontrolle der Retusche ist die Bewegung des Lichtpunktes 31 auf dem Bildschirm 3 mit der Bewegung des Koordinatenstiftes 51 auf dem Digitalisiertablett 50 synchronisiert. Dazu werden die in dem Koordinatenerfassungsgerät gemessenen Bildpunktkoordinaten bzw. Adressen über den Adressbus 53' an das Speichersteuerwerk 8 übermittelt und dort mit den zyklisch aufgerufenen Adressen des Bildwiederholspeichers 7 verglichen. Bei Adressengleichheit entsteht wiederum der Befehl „Lichtmarke" auf der Leitung 34, und der Lichtmarkengenerator 21 erzeugt, wie bereits beschrieben, die bewegliche Lichtmarke 31 auf dem Bildschirm 3.

Zur Ermittlung der Retuschefaktoren r (x, y) für jeden zu retuschierenden Bildpunkt mit den Bildpunktkoordinaten x und y wird der Koordinatenstift 51 vom Bediener als Retuschepinsel benutzt und in nebeneinanderliegenden Linien mehrmals über den Bereich des Digitalisiertabletts 50 geführt, der dem zu retuschierenden Bildbereich entspricht, wobei in dem gewählten Ausführungsbeispiel die Anzahl der Berührungen pro Bildpunkt ein Mass für die gewünschte Zeichnungsverstärkung oder Zeichnungsrücknahme in diesem Bildpunkt ist.

Die Koordinaten x und y der von dem Koordinatenstift 51 berührten oder überfahrenen Punkte werden laufend über den Adressbus 53 an die Auswerteschaltung 48 übermittelt und dort in einem Arbeitsspeicher listenmässig festgehalten. Die Kapazität des Arbeitsspeichers ist so gross, dass z.B. die Bildpunktkoordinatenpaare der letzten 200 Berührungspunkte abgelegt werden können.

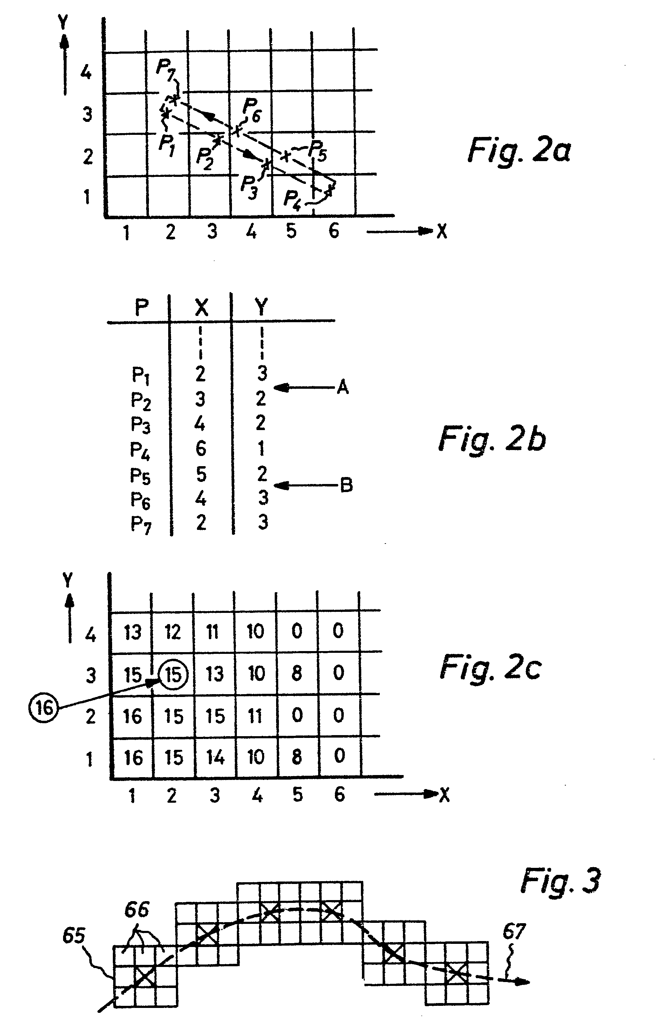

Um die Ermittlung der Retuschefaktoren zu verdeutlichen, zeigt Fig. 2a einen Ausschnitt aus dem Digitalisiertablett 50. Von einem bestimmten Zeitpunkt an, der z.B. durch die Austastlücke der Bildaufzeichnung gekennzeichnet ist, möge der Koordinatenstift 51 vom Punkt $P_1$ (2,3) über den Punkt $P_4$ (6,1) zurück zum Punkt $P_7$ (2,3) eine Hin- und Herbewegung ausgeführt haben. Die Punkte P markieren jeweils den Zeitpunkt einer Koordinatenerfassung in der Messstufe 52.

Fig. 2b zeigt die Liste der berührten Bildpunktkoordinatenpaare in der Reihenfolge der Berührungen. Das Ende einer Austastlücke sei durch einen Pfeil A und der Beginn der folgenden Austastlücke durch einen Pfeil B markiert. Die ermittelten Retuschefaktoren werden in der Austastlücke in den Retuschespeicher 49 überschrieben. Dazu zeigt Fig. 2c den entsprechenden Ausschnitt des Retuschespeichers 49 mit einer momentanen, ortsmässigen Verteilung der ermittelten Retuschefaktoren r vor der Austastlücke.

Mit Beginn der durch den Pfeil B markierten Austastlücke der Bildaufzeichnung wird das erste Bildpunktkoordinatenpaar (2,3) in der Liste aufgerufen und über einen Adressbus 54 die zugehörige Adresse des Retuschespeichers 49 angewählt. Der unter dieser Adresse gespeicherte Retuschefaktor r wird über einen Datenbus 54 ausgelesen, um einen bestimmten Betrag z.B. um 1 (Verstärkung der Zeichnung) erhöht oder um 1 (Rücknahme der Zeichnung) erniedrigt und über den Datenbus 55 wieder in den Retuschespeicher 49 zurückgeschrieben. In dem gewählten Beispiel wird eine Verstärkung der Zeichnung angenommen, so dass der entsprechende Retuschefaktor 15 um 1 auf 16 erhöht und zurückgeschrieben wird.

Dann werden nacheinander die folgenden Bildpunktkoordinatenpaare der Liste aufgerufen und die beschriebenen Massnahmen sinngemäss durchgeführt. Nachdem die Retuschefaktoren in den Retuschespeicher 49 überschrieben sind, wird der Arbeitsspeicher der Auswerteschaltung 48 gelöscht.

Entsprechend der angenommenen 512 × 512 Bildpunkte das dargestellten Bildes hat der Retuschespeicher 49 eine Kapazität von 512 × 512 × 8 bit, so dass pro Bildpunkt (Koordinatenpaar) 255 Berührungen des Koordinatenstiftes 51 gezählt und gespeichert werden können.

Die Austastlücke der Bildaufzeichnung wird vom Speichersteuerwerk 8 über eine Leitung 56 an die Auswerteschaltung 48 signalisiert. Während der Bildaustastung ist das Auslesen der Retuschefaktoren r aus dem Retuschespeicher 49 unterbrochen. Die Art der Überschreibung hat den Vorteil, dass die Retuscheänderungen bereits im neuen Bild sichtbar werden, ohne dass die Bilddarstellung selbst durch den Retuschevorgang gestört wird.

Dadurch, dass der Koordinatenstift 51 vom Bediener sowohl zur Koordinatenerfassung als auch zur Bestimmung der Änderungsbeträge verwendet wird, können im Sinne der konventionellen Pinselretusche in vorteilhafter Weise beliebige graduelle Änderungen der Zeichnung erzielt werden. Da die manuelle Führung des Koordinatenstiftes der des herkömmlichen Retuschepinsels entspricht, kann der Retuscheur, der gewohnt ist, mit dem Retuschepinsel zu arbeiten, ohne Umlernprozess die elektronische Zeichnungsretusche ausführen.

Alternativ könnten die Retuschefaktoren auch aus dem mechanischen Druck ermittelt werden, mit dem der Koordinatenstift 51 auf das Digitalisiertablett 50 gedrückt wird, oder aus der Verweildauer des Koordinatenstiftes 51 auf den entsprechenden Punkten des Digitalisiertabletts 50.

### Korrekturwertgeber 40

Die aus dem Retuschespeicher 49 ausgelesenen Retuschefaktoren werden über einen Datenbus 57 an den Korrekturwertgeber 40 gegeben, in welchem sie nach den angegebenen Gleichung I mit den in dem Farbgeber 38 laufend berechneten Farbinkrementen $\Delta F$ multipliziert werden, um die Korrekturwerte $F_R$ zu erhalten.

Mit dem Befehl auf der Leitung 42 werden die an der Berechnung der entsprechenden Korrekturwerte beteiligten Farbauszüge ausgewählt. Da die Zeichnung, d.h. der Tonwertverlauf in den Farbauszügen, von den Farbwertanteilen der jeweiligen Farbverläufe in dem zu reproduzierenden Farbbild abhängig ist, weisen die einzelnen Farbauszüge eine unterschiedliche Zeichnung auf. Man wird daher im allgemeinen denjenigen Farbauszug für die Berechnung der Korrekturwerte $F_R$ auswählen, welcher die beste Zeichnung aufweist. Es können aber auch die Farbinkremente mehrerer Farbauszüge zur Berechnung der Korrekturwerte herangezogen werden, wobei das Mischungsverhältnis durch die Anteilfaktoren bestimmt wird.

Durch den Befehl auf der Leitung 41 gesteuert werden von der ermittelten Korrekturwerten $F_R$ nur die Korrekturwerte des zu retuschierenden Farbauszugs weitergeleitet, in dem die Zeichnung verbessert werden soll. Als zu retuschierender Farbauszug wird man im allgemeinen den Farbauszug derjenigen Druckfarbe aussuchen, die die Zeichnung als verschwärzlichende Farbe im Druck besonders gut wiedergibt.

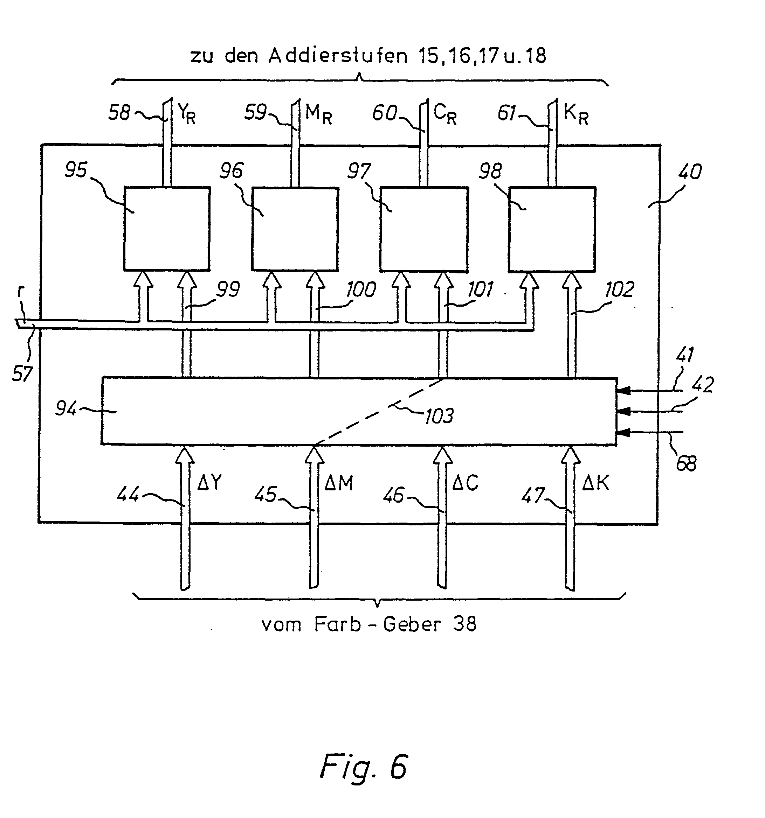

Fig. 6 zeigt ein Ausführungsbeispiel des Korrekturwertgebers 40.

Zur Verdeutlichung der Wirkungsweise des Retuscheplatzes soll die partielle und graduelle Verbesserung der Zeichnung d.h. das Hineinretuschieren feinerer Tonwertabstufungen in einen Farbauszug an einem typischen Beispiel erläutert werden.

Die Hautfarbe Rosa wird im wesentlichen von den Druckfarben Magenta und Gelb, die Zeichnung dagegen von der Druckfarbe Cyan als verschwärzlichende Farbe bestimmt.

Zur Verbesserung der Zeichnung wird daher der Farbauszug Cyan retuschiert, indem wählbare Anteile desjenigen oder derjenigen Farbauszüge, die bereits die beste Zeichnung aufwiesen, in den Farbauszug Cyan partiell (z.B. in die Gesichtsfläche), ortsgenau und der gewünschten Wirkung entsprechend verlaufend eingemischt werden. Der Farbauszug Magenta möge die beste Zeichnung aufweisen, so dass dieser das Farbinkrement liefert. In diesem Fall werden die Korrekturwerte $M_F$, $Y_R$, und $K_R$ auf den Datenleitungen 58, 59 und 61, gesteuert durch den Befehl auf der Leitung 41 an den Korrekturwertgeber 40, weggeschaltet. Die unveränderten Farbwerte Y, M und K gelangen über den Datenbus 20 in den Farbgeber 38, in dem laufend die ortsabhängigen Farbinkremente $\Delta Y$, $\Delta M$ und $\Delta K$ aus den Farbwerten Y, M und K sowie aus dem gewählten Anteilsfaktor $a_M$ für die Farbwerte des Farbauszugs Magenta nach der angegebenen Gleichung III gebildet werden. Die Farbinkremente gelangen über die Datenleitungen 44, 45 und 47 an den Korrekturwertgeber 40. Gegebenenfalls können die nicht benötigten Farbwerte des Farbauszugs Cyan in dem Farbgeber 38 weggeschaltet werden.

Gemäss dem gewählten Beispiel wird in dem Korrekturwertgeber 40 das Farbinkrement $\Delta M$, gesteuert von dem Befehl auf der Leitung 42, ausgewählt und die entsprechenden Korrekturwerte $C_R$ = $r \cdot \Delta M$ für den zu retuschierenden Farbauszug Cyan gebildet.

Die Korrekturwerte $C_R$ gelangen über die Datenleitung 60 an den Addierer 17 und korrigieren dort die Farbwerte C des Farbauszuges Cyan gemäss der Gleichung $C' = C + C_R$.

Über den gemeinsamen Adressbus 9 werden die Bildwiederholspeicher 7 und der Retuschespeicher 49 zyklisch und synchron adressiert, wodurch bildpunktmässig zugeordnete Farbwerte und Retuschefaktoren gleichzeitig ausgelesen und verarbeitet werden.

Ebenso synchron werden die Farbinkremente und die Korrekturwerte gebildet, so dass in jedem Moment die Farbwerte der Bildpunkte des Farbauszugs Cyan in Abhängigkeit der bildpunktmässig zugeordneten Farbwerte des Farbauszugs Magenta geändert werden. Der Retuscheur bestimmt mit Hilfe des Koordinatenstiftes 51 den zu retuschierenden Bereich im Farbauszug Cyan und die Retuschestärke pro Bildpunkt, die für die gewünschte graduelle oder verlaufende Verbesserung der Zeichnung erforderlich ist. Dabei kann der Anteilsfaktor $a_M$, welcher den prozentualen Anteil des Farbauszugs Magenta bestimmt und dem Farbauszug Cyan mit jeder Berührung des Digitalisiertabletts 50 mit dem Koordinatenstift 51 ortsgenau hinzugemischt wird, den Erfordernissen entsprechend geändert werden.

Zur Sichtkontrolle wird der zu retuschierende Farbauszug auf dem Bildschirm 3 des Farbmonitors 2 in Schwarz/Weiss dargestellt. In dem Drucknachbildungsrechner 23 befindet sich ein nicht dargestellter Umschalter, der von einem Befehl auf einer Leitung 62 betätigt wird. Der Umschalter legt die betreffenden Farbauszugssignale gleichzeitig an alle Farbkanäle oder auf den Schwarzkanal. Dabei ist Sorge getragen, dass die drei Ansteuersignale für den Farbmonitor 2 betragsmässig gleich gross sind.

Die Darstellung des zu retuschierenden Farbauszugs kann auch auf einem Schwarz/Weiss-Monitor erfolgen. Wenn die Gesamtwirkung der Retusche an dem Farbbild beurteilt werden soll, wird der entsprechende Befehl auf der Leitung 62 rückgängig gemacht.

Wie bereits erwähnt, weist die Eingabestufe 37 ein Tastenfeld 37''' mit einer Anzahl von Betriebstasten auf, mit denen verschiedene Funktionen vor, während und nach der Retusche angewählt werden können. Diese Funktionen sollen nun im einzelnen erläutert werden.

*Flächenmässige Auflösung*

Die feinste flächenmässige Auflösung, die mit dem Koordinatenerfassungsgerät erzielt werden kann, beträgt einen Bildpunkt. Um grössere Flächen schneller retuschieren zu können, kann die Anzahl der mit jeder Berührung des Koordinatenstiftes 51 erfassten Bildpunkte vergrössert werden. In diesem Falle werden in der Auswerteschaltung 48 nicht nur der Retuschefaktor des mit dem Koordinatenstift 51 berührten Bildpunktes, sondern auch die Retuschefaktoren der diesen Bildpunkt umgebenden Bildpunkte verändert, wodurch gewissermassen die Fläche des Retuschepinsels vergrössert ist. Die Pinselfläche kann beispielsweise rechteckförmig oder kreisförmig gewählt werden.

Zur Vergrösserung der Pinselfläche betätigt der Bediener eine Betriebstaste „Pinselfläche", womit ein Steuersignal über eine Mehrflachleitung 63 an die Auswerteschaltung 48 gegeben wird. In diesem Falle werden in der Auswerteschaltung 48 gleichzeitig alle Retuschefaktoren der Pinselfläche berechnet. Grösse und Formen der Pinselfläche werden dem Bediener auf dem Bildschirm 2 des Farbmonitors 3 durch eine entsprechend geformte und vergrösserte Lichtmarke 31 angezeigt. Zur Verdeutlichung zeigt Fig. 3 die Anordnung der jeweils gleichzeitig retuschierten Bildpunkte bei einer vergrösserten Pinselfläche 65, die beispielsweise aus 3 × 3 Bildpunkten 66 besteht. Die Linie 67 deutet eine beliebige Bewegung des Koordinatenstiftes 51 an.

*Konturenmaske*

Soll ein exakt definierter Retuschebereich des Bildes korrigiert werden, so muss der Bediener den Koordinatenstigt sehr sorgfältig an den Konturen des Retuschebereiches entlangführen. Diese Arbeit kann in vorteilhafter Weise erleichtert werden, wenn der Retuschebereich durch eine elektronische Konturenmaske geometrisch begrenzt wird. In diesem Falle entfällt das sorgfältige Umfahren des Retuschebereiches mit dem Koordinatenstift, da die Korrektur automatisch auf den Retuschebereich begrenzt wird.

*Darstellung des Originalbildes*

Zur Beurteilung des Farbbildes in einem beliebigen Stadium der Retusche ist es vorteilhaft, kurzzeitig das unretuschierte Originalbild auf dem Bildschirm 3 des Farbmonitors 2 aufzuzeichnen. Dazu drückt der Bediener die Betriebstaste „Original" der Eingangsstufe 37. Ein entsprechender Befehl auf einer Leitung 68 an den Korrekturwertgeber 40 schaltet die Korrekturwerte $F_R$ von den Datenleitungen 58 bis 61 weg, wodurch die aus dem Bildwiederholspeicher 7 ausgelesenen Farbwerte F des Originals ohne Beeinflussung 15 durch die Korrekturwerte $F_R$ aufgezeichnet werden.

*Rücknahme der Retusche*

War die Zeichnungsverstärkung zu stark, so kann sie wieder abgeschwächt werden, indem der Bediener zunächst eine Betriebstaste „Rücknahme" in der Eingabestufe 37 betätigt und dann mit Radierbewegungen des Koordinatenstiftes 51 über die betreffende Bildstelle fährt. In diesem Falle sorgt ein Befehl auf der Mehrfachleitung 63 dafür, dass die Retuschefaktoren in der Auswerteschaltung 48 und entsprechend im Retuschespeicher 49 um die erforderlichen Beträge erniedrigt werden.

Ist die Löschung der Retuschewirkung einer oder mehrerer Bewegungen des Koordinatenstiftes 51 gewünscht, so wird in der Auswerteschaltung 48 in zweckmässiger Weise die gespeicherte Liste von Bildpunktkoordinatenpaaren und zugeordneten Retuschefaktoren rückwärts abgearbeitet, wodurch ohne erneute Bewegung des Koordinatenstiftes die Retusche konturengenau zurückgenommen wird.

*Löschung der Retusche*

Die gesamte Retusche kann rückgängig gemacht werden, indem der Inhalt des Retuschespeichers 49 gelöscht wird. Dazu drückt der Bediener eine Betriebstaste „Löschen" in der Eingabestufe 37, und ein entsprechender Befehl auf einer Leitung 69 löscht den Speicherinhalt.

Ist die Retusche eines Teilbereiches abgeschlossen und möchte man einen neuen Anteilsfaktor $a_F$ für einen anderen Teilbereich eingeben, so werden zuvor die retuschierten Farbwerte F' über den rückgeführten Datenbus 70 in den Bildwiederholspeicher 7 geladen, und eine neue Teilretusche kann beginnen.

Ist schliesslich die gesamte Retusche beendet, werden die retuschierten Farbwerte F' mittels des Prozessrechners 4 auf das Speichermedium 1 zurückgeschrieben.

Fig. 4 zeigt ein Ausführungsbeispiel für das Speichersteuerwerk 8 der Fig. 1.

Das Speichersteuerwerk 8 enthält einen Taktgenerator 72, welcher eine Zähltaktfolge $T_0$ über einen Zähleingang 73 in einen X-Adresszähler 74 einzählt. Der X-Adresszähler 74 ist ein 9-bit-Binärzähler und ruft über einen Adressbus 9' die X-Adressen des Bildwiederholspeichers 7 von 0 bis 511 auf. Jeweils nach 511 gezählten Takten erscheint am Ausgang 75 des Adresszählers 74 ein Takt $T_1$, der über einen Zähleingang 76 in einen Y-Adresszähler 77 eingezählt wird. Der Y-Adresszähler 77 ist ebenfalls ein 9-bit-Binärzähler und ruft die entsprechenden Y-Adressen des Bildwiederholspeichers 7 von 0 bis 511 über einen Adressbus 9" auf. Die Adressbusse 9' und 9" werden zu dem Adressbus 9 vereinigt, der mit dem Bildwiederholspeicher 7 verbunden ist. Der Y-Adresszähler 77 erzeugt an seinem Ausgang 78 ebenfalls nach 511 eingezählten Takten einen Takt $T_2$. Aus den Takten $T_1$ und $T_2$ werden die Zeilenstartimpulse (ZS) und die Bildstartimpulse (BS) auf den Leitungen 29 und 30 für die Bildaufzeichnung abgeleitet.

Die Adressbusse 9' und 9" stehen jeweils mit den ersten Vergleichseingängen 79 und 80 der Vergleicher 81 und 82 in Verbindung. Die zweiten Vergleichseingänge 83 und 84 der Vergleicher 81 und 82 sind mit X/Y-Koordinaten beaufschlagt, welche zur Verschiebung der Lichtmarke 31 mittels des Koordinatensteuerhebels 32 vorgegeben werden können oder welche zur Synchronisierung der Lichtmarke 31 mit der Bewegung des Koordinatenstiftes 51 von der Messstufe 52 erzeugt werden. Die Signalausgänge 85 und 86 der Vergleicher 81 und 82 sind über ein UND-Tor 87 miteinander verknüpft. Bei Gleichheit der Adressen erscheint auf der Leitung 34 das Signal „Lichtmarke".

Fig. 5 zeigt ein Ausführungsbeispiel des Farbgebers 38. Er besteht aus vier digitalen Multiplizierstufen 90, 91, 92 und 93 zur Bildung der vier Farbinkremente $\Delta Y$, $\Delta M$, $\Delta C$ und $\Delta K$ aus den Farbwerten Y, M, C und K und den entsprechenden Anteilsfaktoren $a_Y$, $a_M$, $a_C$ und $a_K$.

Die Farbwerte werden den Multiplizierstufen 90, 91, 92 und 93 über den Datenbus 20 und die Anteilsfaktoren über den Datenbus 43 zugeführt.

Fig. 6 zeigt ein Ausführungsbeispiel des Korrekturwertgebers 40, der aus einer Auswahlschaltung 94 und vier Multiplizierstufen 95, 96, 97 und 98 besteht. In der Auswahlschaltung 94 werden die zur Berechnung der Korrekturwerte erforderlichen Farbinkremente, durch den Befehl auf der Leitung 42 gesteuert, ausgewählt und durch den Befehl auf der Leitung 41 zu der betreffenden Multiplizierstufe 95 bis 98 über einen der Datenbusse 99 bis 102 durchgeschaltet. In dem gewählten Beispiel, in dem der Farbauszug Cyan in Abhängigkeit des Farbauszugs Magenta retuschiert wird, verbindet die Auswahlschaltung 94 die entsprechenden Datenbusse 45 und 101, was durch eine gestrichelte Linie 103 angedeutet ist. In der Auswahlschaltung 94 kann gegebenenfalls eine Mischung der Farbinkremente erfolgen, wenn die Retusche in Abhängigkeit mehrerer Farbauszüge erfolgen soll.

In der betreffenden Multiplizierstufe 95 bis 98 werden dann die Korrekturwerte aus den Retuschefaktoren auf dem Datenbus 57 und den ausgewählten Farbinkremente gebildet, im gewählten Beispiel also der Korrekturwert $C_R$ in der Multiplizierstufe 97 aus den Retuschefaktoren r und den Farbinkrementen $\Delta M$.

Zur Darstellung des unretuschierten Bildes auf dem Bildschirm 3 des Farbmonitors 2 in der Schaltungsanordnung nach Fig. 1 werden die Datenbusse 99 bis 102, gesteuert von dem Befehl auf der Leitung 68, auf Massepotential gelegt, wodurch, wie bereits beschrieben, die Korrekturwerte zu Null werden.

Die Erfindung wird mit Vorteil auf dem gesamten Gebiet der elektronischen Reproduktionstechnik angewendet, insbesondere auf dem Gebiet der Farbbildreproduktion mittels elektronischer Farbscanner und Farbreproduktionssysteme zur Herstellung von retuschierten und korrigierten Druckformen in Form von Farbauszügen oder Druckzylindern.

## Patentansprüche

1. Verfahren zur partiellen Korrektur der Zeichnung bei der Farbbildreproduktion, in dem die durch bildpunktweise und trichromatische Vorlagenabtastung gewonnenen Farbsignale digitalisiert und die digitalen Farbwerte der einzelnen Farbauszüge in einem Speichermedium abgelegt werden und in dem die Farbwerte unter Kontrolle geändert werden, dadurch gekennzeichnet, dass für die Farbwerte (Y, M, C, K) eines zu retuschierenden Farbauszuges bildpunktweise ortsabhängige Korrekturwerte ($Y_R$, $M_R$, $C_R$, $K_R$) aus den bildpunktmässig zugeordneten Farbwerten (Y, M, C, K) mindestens eines nicht zu retuschierenden Farbauszuges durch freie Wahl von Anteilsfaktoren $a_F$ abgeleitet werden, und dass die zu korrigierenden Farbwerte (Y, M, C, K) des zu retuschierenden Farbauszuges durch die ortsmässig zugeordneten Korrekturwerte ($Y_R$, $M_R$, $C_R$, $K_R$) geändert werden, um die korrigierten Farbwerte (Y', M', C', K') zu erhalten.

2. Verfahren nach Anspruch 1, dadurch gekennzeichnet, dass bildpunktweise aus wählbaren Anteilen der Farbwerte (Y, M, C, K) mindestens eines nicht zu retuschierenden Farbauszugs ortsabhängige Farbinkrement ($\Delta Y$, $\Delta M$, $\Delta C$, $\Delta K$) abgeleitet werden, welche jeweils den kleinsten Änderungsbetrag für den zu korrigierenden Farbwert (Y, M, C, K) eines Bildpunktes im zu retuschierenden Farbauszug darstellt, dass die Bildpunktkoordinaten (x, y) der zu korrigierenden Farbwerte (Y, M, C, K) erfasst werden, dass zur Bestimmung der jeweiligen Korrekturstärke zu jedem erfassten Koordinatenpaar (x, y) ein Retuschefaktor (r) ermittelt wird, welcher für jeden Korrekturwert ($Y_R$, $M_R$, $C_R$, $K_R$) die Anzahl der zu summierenden Farbinkremente ($\Delta Y$, $\Delta M$, $\Delta C$, $\Delta K$) angibt, und dass bildpunktmässig zugehörige Retuschefaktoren (r) und Farbinkremente (Y, M, C, K) miteinander verknüpft werden, um die Korrekturwerte ($Y_R$, $M_R$, $C_R$, $K_R$) zu erhalten.

3. Verfahren nach einem der beiden Ansprüche 1 oder 2, dadurch gekennzeichnet, dass die digitalen Farbwerte (Y, M, C, K) aus dem Speichermedium (1) ausgelesen, durch die Korrekturwerte ($Y_R$, $M_R$, $C_R$, $K_R$) geändert und die korrigierten Farbwerte (Y', M', C', K') nach beendeter Retusche wieder auf dem Speichermedium (1) abgelegt werden.

4. Verfahren nach einem der Ansprüche 1 bis 3, dadurch gekennzeichnet, dass die Bildpunktkoordinaten (x, y) der zu korrigierenden Farbwerte (Y, M, C, K) in einem Koordinatenerfassungsgerät (50, 51, 52) durch Markieren der ortsmässig zugeordneten Punkte mit einer Markiervorrichtung, insbesondere mit einem Koordinatenstift (51), ermittelt werden.

5. Verfahren nach Anspruch 4, dadurch gekennzeichnet, dass die Retuschefaktoren (r) aus der Anzahl von Berührungen der entsprechenden Punkte mit der Markiervorrichtung (51) des Koordinatenerfassungsgerätes (50, 51, 52) ermittelt werden, wobei die Markiervorrichtung (51) wie ein Retuschepinsel über den Bereich des Koordinatenerfassungsgerätes (50, 51, 52) geführt wird, der dem zu korrigierenden Bereich des Farbauszugs entspricht.

6. Verfahren nach Anspruch 4, dadurch gekennzeichnet, dass die Retuschefaktoren (r) aus dem Druck der Markiervorrichtung (51) auf die entsprechenden Punkte des Koordinatenerfassungsgerätes (50, 51, 52) ermittelt werden.

7. Verfahren nach Anspruch 4, dadurch gekennzeichnet, dass die Retuschefaktoren (r) aus der Verweildauer der Markiervorrichtung (51) auf den entsprechenden Punkten des Koordinatenerfassungsgerätes (50, 51, 52) ermittelt werden.

8. Verfahren nach Anspruch 5, dadurch gekennzeichnet, dass die Retuschefaktoren (r) mit jeder Berührung um einen Betrag erhöht (Verstärkung der Retusche) oder erniedrigt (Rücknahme der Retusche) werden.

9. Verfahren nach Anspruch 6, dadurch gekennzeichnet, dass die Retuschefaktoren (r) bei einem Druckanstieg erhöht (Verstärkung der Retusche) und bei einem Druckabfall erniedrigt (Rücknahme der Retusche) werden.

10. Verfahren nach Anspruch 7, dadurch gekennzeichnet, dass die Retuschefaktoren (r) entsprechend der jeweiligen Verweildauer um einen Betrag erhöht (Verstärkung der Retusche) oder erniedrigt (Rücknahme der Retusche) werden.

11. Verfahren nach einem der Ansprüche 4 bis 10, dadurch gekennzeichnet, dass der unretuschierte oder retuschierte Farbauszug zur Sichtkontrolle auf dem Bildschirm (3) eines Monitors (2) dargestellt wird, dass in den Bildschirm (3) eine verschiebbare Lichtmarke (31) eingeblendet wird und dass die Bewegung der Lichtmarke (31) mit der Bewegung der Markiervorrichtung (51) des Koordinatenerfassungsgerätes (50, 51, 52) synchronisiert wird.

12. Verfahren nach einem der Ansprüche 4 bis 10, dadurch gekennzeichnet, dass das unretuschierte oder retuschierte Farbbild (Original) zur Sichtkontrolle auf dem Bildschirm (3) eines Farbmonitors (2) dargestellt wird, dass in den Bildschirm (3) eine verschiebbare Lichtmarke (31) eingeblendet wird und dass die Bewegung der Lichtmarke (31) mit der Bewegung der Markiervorrichtung (51) des Koordinatenerfassungsgerätes (50, 51, 52) synchronisiert wird.

13. Verfahren nach einem der Ansprüche 1 bis 12, dadurch gekennzeichnet, dass die digitalen Farbwerte (Y, M, C, K) der einzelnen Farbauszüge aus dem Speichermedium (1) in einen Bildwiederholspeicher (7) geladen werden und dass der Bildwiederholspeicher (7) zur punktweisen Aufzeichnung auf dem Monitor (2) zyklisch ausgelesen wird.

14. Verfahren nach einem der Ansprüche 2 bis 13, dadurch gekennzeichnet, dass die ermittelten Retuschefaktoren (r) bildpunktweise in einen Retuschespeicher (49) überschrieben werden und dass der Retuschespeicher (49) zur bildpunktmässigen Zuordnung von Farbwerten (Y, M, C, K) und Korrekturwerten ($Y_R$, $M_R$, $C_R$, $K_R$) synchron, mit dem Bildwiederholspeicher (7) ausgelesen wird.

15. Verfahren nach Anspruch 14, dadurch gekennzeichnet, dass die durch den Korrekturvorgang geänderten Retuschefaktoren (r) jeweils in einer Austastlücke der Bildaufzeichnung in den Retuschespeicher (49) überschrieben werden.

16. Verfahren nach Anspruch 15, dadurch gekennzeichnet, dass die Bildpunktkoordinaten (x, y) der markierten Punkte in der Reihenfolge ihrer Erfassung listenmässig abgelegt werden, und dass die Bildpunktkoordinaten (x, y) paarweise in umgekehrter Reihenfolge aufgerufen und die entsprechenden Retuschefaktoren (r) schrittweise in dem Retuschespeicher (49) geändert werden, um die erfolgte Korrektur schrittweise und konturengenau rückgängig zu machen.

17. Verfahren nach Anspruch 15, dadurch gekennzeichnet, dass die gesamte Korrektur durch Löschen des Retuschespeichers (49) rückgängig gemacht wird.

18. Verfahren nach einem der Ansprüche 4 bis 17, dadurch gekennzeichnet, dass die Markiervorrichtung (51) gleichzeitig die Bildpunktkoordinaten (x, y) mehrerer zu korrigierender Farbwerte (Y, M, C, K) erfasst und dass diese Farbwerte entsprechend einer vergrösserten Pinselfläche gleichzeitig geändert werden.

19. Verfahren nach Anspruch 18, dadurch gekennzeichnet, dass die vergrösserte Pinselfläche durch eine entsprechend vergrösserte Lichtmarke (31) angezeigt wird.

20. Verfahren nach einem der Ansprüche 1 bis 19, dadurch gekennzeichnet, dass der zu retuschierende Bildbereich durch eine elektronisch erzeugte Maske begrenzt wird.

21. Anordnung zur Durchführung des Verfahrens nach einem der beiden Ansprüche 1 oder 2, bestehend aus einem Speichermedium für die Farbwerte der einzelnen Farbauszüge, einem nachgeschalteten Bildwiederholspeicher und aus einem mit dem Bildwiederholspeicher verbundenen Monitor für die Sichtkontrolle, gekennzeichnet durch einen Farbgeber (38) zur Bildung der Farbinkremente ($\Delta Y$, $\Delta M$, $\Delta C$, $\Delta K$), einen Retuschegeber (39) zur Bildung der Retuschefaktoren (r) für die zu korrigierenden Farbwerte (Y, M, C, K), einen mit dem Farbgeber (38) und dem Retuschegeber (39) verbundenen Korrekturwertgeber (40) zur Bildung der Korrekturwerte ($Y_R$, $M_R$, $C_R$, $K_R$), eine Ansteuerung (42) des Korrekturwertgebers für mindestens einen nicht zu retuschierenden Farbauszug und eine Ansteuerung (41) des Korrekturwertgebers für einen zu retuschierenden Farbauszug und durch dem Bildwiederholspeicher (7) nachgeschaltete Verknüpfungsstufen (15, 16, 17, 18) in den Farbkanälen zur Änderung der Farbwerte durch die Korrekturwerte.

22. Anordnung nach Anspruch 21, dadurch gekennzeichnet, dass der Retuschegeber (39) aus einem Koordinatenerfassungsgerät (50, 51, 52) zur Ermittlung der Bildpunktkoordinaten (x, y) der zu korrigierenden Farbwerte, aus einer mit dem Koordinatenerfassungsgerät (50, 51, 52) verbundenen Auswerteschaltung (48) zur Bildung der Retuschefaktoren (r) für jedes erfasste Bildpunktkoordinatenpaar und aus einem mit der Auswerteschaltung (48) verbundenen Retuschespeicher (49) besteht.

**Revendications**

1. Procédé pour la correction partielle de la netteté lors d'une reproduction d'images en couleurs, procédé dans lequel les signaux de couleur, obtenus grâce à un balayage trichromatique et par point d'image du modèle, sont mis sous forme numérique, et les valeurs de couleur numériques des sélections des couleurs individuelles sont déposées sur un support d'enregistrement sur lequel les valeurs de couleur sont modifiées sous contrôle, procédé caractérisé en ce que, pour les valeurs de couleur (Y, M, C, K) d'une sélection des couleurs à retoucher, des valeurs de correction ($Y_R$, $M_R$, $C_R$, $K_R$), dépendantes de la position par point d'image, sont dérivées par un libre choix de facteurs de composantes $a_F$ à partir des valeurs de couleur (Y, M, C, K) associées par point d'image d'au moins une sélection des couleurs qui n'est pas à retoucher, et que les valeurs de couleur à corriger (Y, M, C, K) de la sélection des couleurs à retoucher sont modifiées grâce aux valeurs de correction associées par position des points d'image correspondants ($Y_R$, $M_R$, $C_R$, $K_R$) pour obtenir les valeurs de couleur corrigées ($Y'$, $M'$, $C'$, $K'$).

2. Procédé selon la revendication 1, caractérisé en ce que des incréments de couleur (Y, M, C, K) dépendant de la position sont dérivés par point à partir de composantes susceptibles d'être sélectionnées des valeurs de couleur (Y, M, C, K) d'au moins une sélection des couleurs qui n'est pas à retoucher, ces incréments représentant respectivement la valeur minimale de modification pour la valeur de couleur à corriger (Y, M, C, K) d'un point d'image dans la sélection des couleurs à retoucher, les coordonnées de points d'image (x, y) des valeurs de couleur à corriger (Y, M, C, K) étant détectées, tandis que, pour déterminer l'importance respective des corrections correspondant à chacune des paires de coordonnées (x, y) détectées, un facteur de retouches (r) est déterminé, facteur qui donne pour chaque valeur de correction ($Y_R$, $M_R$, $C_R$, $K_R$) le nombre des incréments de couleur (Y, M, C, K) à totaliser, les facteurs de retouches (r) associés par point d'image et les incréments de couleur (Y, M, C, K) étant combinés ensemble pour obtenir les valeurs de correction ($Y_R$, $M_R$, $C_R$, $K_R$).

3. Procédé selon l'une des revendications 1 ou 2, caractérisé en ce que les valeurs de couleur numériques (Y, M, C, K) sont lues à partir du support d'enregistrement (1), modifiées par les valeurs de correction ($Y_R$, $M_R$, $C_R$, $K_R$), et les valeurs de couleur ainsi corrigées ($Y'$, $M'$, $C'$, $K'$) étant à nouveau déposées sur le support d'enregistrement (1) lorsque les retouches sont terminées.

4. Procédé selon l'une des revendications 1 à 3, caractérisé en ce que les coordonnées de points d'image (x, y) des valeurs de couleur (Y, M, C, K) à corriger sont déterminées dans un appareil de détection de coordonnées (50, 51, 52) par repérage des points associés par position avec un dispositif de repérage, notamment avec un stylet de coordonnées (51).

5. Procédé selon la revendication 4, caractérisé en ce que les facteurs de retouches (r) sont déterminés à partir du nombre de contacts des points correspondants avec le dispositif de repérage (51) de l'appareil de détection des coordonnées (50, 51, 52), le dispositif de repérage (51), tel qu'un pinceau de retouches, étant guidé sur la zone de l'appareil de détection des coordonnées (50, 51, 52) qui correspond à la zone à corriger de la sélection des couleurs.

6. Procédé selon la revendication 4, caractérisé en ce que les facteurs de retouches (r) sont déterminés à partir de la pression du dispositif de repérage (51) sur les points correspondants de l'appareil de détection de coordonnées (50, 51, 52).

7. Procédé selon la revendication 4, caractérisé en ce que les facteurs de retouches (r) sont déterminés à partir de la durée de séjour du dispositif de repérage (51) sur les points correspondants de l'appareil de détection de coordonnées (50, 51, 52).

8. Procédé selon la revendication 5, caractérisé en ce que les facteurs de retouches (r) sont, à chaque contact, augmentés d'une quantité (renforcement de la retouche) ou bien diminués d'une quantité (reprise de la retouche).

9. Procédé selon la revendication 6, caractérisé en ce que les facteurs de retouches (r) sont augmentés lors d'une augmentation de la pression (renforcement de la retouche) et diminués lors d'un abaissement de la pression (reprise de la retouche).

10. Procédé selon la revendication 7, caractérisé en ce que les facteurs de retouches (r) sont, d'une façon correspondant à la durée de séjour respective, augmentés d'une quantité (renforcement de la retouche) ou bien diminués d'une quantité (reprise de la retouche).

11. Procédé selon l'une des revendications 4 à 10, caractérisé en ce que la sélection des couleurs, non retouchée ou bien retouchée, est représentée pour permettre un contrôle visuel sur l'écran (3) d'un appareil de contrôle (2), un repère lumineux déplaçable (31) étant surimpressionné sur l'écran (3) et le déplacement de ce repère lumineux (31) étant synchronisé avec le déplacement du dispositif de repérage (51) de l'appareil de détection de coordonnées (50, 51, 52).

12. Procédé selon l'une des revendications 4 à 10, caractérisé en ce que l'image en couleurs non retouchée ou bien retouchée (original) est représentée pour permettre un contrôle visuel sur l'écran (3) d'un appareil de contrôle de couleur (2), un repère lumineux déplaçable (31) étant surimpressionné sur l'écran (3) et le déplacement de ce repère lumineux (31) étant synchronisé avec le déplacement du dispositif de repérage (51) de l'appareil de détection de coordonnées (50, 51, 52).

13. Procédé selon l'une des revendications 1 à 12, caractérisé en ce que les valeurs de couleur numériques (Y, M, C, K) des sélections des couleurs individuelles prélevées à partir du support d'enregistrement (1) sont introduites dans une mémoire de répétition d'image (7), cette mémoire de répétition d'image (7) étant lue cycliquement pour permettre l'enregistrement par point sur l'appareil de contrôle (2).

14. Procédé selon l'une des revendications 2 à 13, caractérisé en ce que les facteurs de retouches (r) ainsi déterminés sont transcrits par point dans une mémoire de retouche (49), cette mémoire de retouche (49) étant lue en synchronisme avec la mémoire de répétition d'image (7) pour l'association par points d'image de valeurs de couleur (Y, M, C, K) et de valeurs de correction ($Y_R$, $M_R$, $C_R$, $K_R$).

15. Procédé selon la revendication 14, caractérisé en ce que les facteurs de retouches (r), modifiés au cours du processus de correction, sont respectivement transcrits dans une lacune d'exploration de l'enregistrement d'image dans la mémoire de retouche (49).

16. Procédé selon la revendication 15, caractérisé en ce que les coordonnées de points d'image (x, y) des points repérés sont déposées sous forme de listes dans l'ordre de leur détection, tandis que ces coordonnées de points d'image (x, y) sont appelées dans l'ordre inverse et les facteurs de retouche correspondants (r) sont modifiés par étapes dans la mémoire de retouche (49), pour annuler par étape et en suivant les contours la correction effectuée.

17. Procédé selon la revendication 15, caractérisé en ce que l'ensemble de la correction est annulé par effacement de la mémoire de retouche (49).

18. Procédé selon l'une des revendications 4 à 17, caractérisé en ce que le dispositif de repérage (51) détecte simultanément les coordonnées de point d'image (x, y) de plusieurs valeurs de couleur à corriger (Y, M, C, K), ces valeurs de couleur étant modifiées simultanément de façon correspondant à une surface de pinceau augmentée.

19. Procédé selon la revendication 18, caractérisé en ce que la surface de pinceau augmentée est indiquée par un repère lumineux (31) augmenté de façon correspondante.

20. Procédé selon l'une des revendications 1 à 19, caractérisé en ce que la zone d'image à retoucher est délimitée par un masque obtenu électroniquement.

21. Dispositif pour la mise en œuvre du procédé selon l'une des revendications 1 ou 2, dispositif constitué d'un support d'enregistrement pour les valeurs de couleur des différentes sélections des couleurs, d'une mémoire de répétition d'image branchée à la suite, et d'un appareil de contrôle pour le contrôle visuel relié à la mémoire de répétition d'image, dispositif caractérisé en ce qu'il comporte un indicateur de couleur (38) pour la formation des incréments de couleur ($\Delta Y$, $\Delta M$, $\Delta C$, $\Delta K$), un indicateur de retouche (39) pour la formation des facteurs de retouches (r) pour les valeurs de couleur à corriger (Y, M, C, K), un indicateur de valeur de correction (40) relié à l'indicateur de couleur (38) et à l'indicateur de retouche (39) pour la formation des valeurs de correction ($Y_R$, $M_R$, $C_R$, $K_R$), le dispositif comportant également une commande (42) de l'indicateur de valeur de correction pour au moins une sélection des couleurs qui n'est pas à retoucher, ainsi qu'une commande (41) de l'indicateur de valeur de correction pour une sélection des couleurs à retoucher, le dispositif comportant également des étages de combinaison (15, 16, 17, 18) branchés à la suite de la mémoire de répétition d'image (7) sur les canaux de couleur, pour modifier les valeurs de couleur grâce aux valeurs de correction.

22. Dispositif selon la revendication 21, caractérisé en ce que l'indicateur de retouche (39) est constitué par un appareil de détection de coordonnées (50, 51, 52), pour déterminer les coordonnées de points d'image (x, y) des valeurs de couleur à corriger d'un circuit d'exploitation (48) relié à l'appareil de détection de coordonnées (50, 51, 52), pour former les facteurs de retouches (r) correspondant à chaque paire de coordonnées de points d'image détectée, et d'une mémoire de retouche (49) reliée au circuit d'exploitation (48).

## Claims

1. Method for partial correction of the definition during colour image reproduction, in which the colour signals obtained by image-dot-wise and trichromatic scanning of an original are digitalized and the digital colour values of the individual colour separations are stored in a storage medium and the colour values are modified under control, characterized in that correction values ($Y_R$, $M_R$, $C_R$, $K_R$) which are locus-dependent are obtained image dot by image dot for the colour values (Y, M, C, K) of a colour separation which is to be retouched from the colour values (Y, M, C, K) co-ordinated image dot by image dot of at least one colour separation which does not have to be retouched, by free selection of operating factors $a_F$, and that the colour values (Y, M, C, K) intended to be corrected of the colour separation which is to be retouched are modified by the positionally co-ordinated correction values ($Y_R$, $M_R$, $C_R$, $K_R$) to obtain the corrected colour values ($Y'$, $M'$, $C'$, $K'$).

2. Method according to Claim 1, characterized in that locus-dependent colour increments ($\Delta Y$, $\Delta M$, $\Delta C$, $\Delta K$) are derived image dot by image dot from selectible portions of the colour values (Y, M, C, K) of at least one colour separation which does not have to be retouched, which in each case represents the minimum alteration quantity for the colour value (Y, M, C, K) of an image dot in the colour separation which is to be retouched, that the image dot co-ordinates (x, y) of the colour values (Y, M, C, K) which are to be retouched are determined, that a retouching factor (r), which for each correction value ($Y_R$, $M_R$, $C_R$, $K_R$) indicates the number of the colour increments ($\Delta Y$, $\Delta M$, $\Delta C$, $\Delta K$) which are to be summated, is established to determine the momentary correction intensity for each pair of co-ordinates (x, y) established, and that retouching factors (r) and colour increments ($\Delta Y$, $\Delta M$, $\Delta C$, $\Delta K$) corresponding to each other image-dot-wise are combined with each other to obtain the correction values ($Y_R$, $M_R$, $C_R$, $K_R$).

3. Method according to one of Claims 1 or 2, characterized in that the digital colour values (Y, M, C, K), read out of the storage medium (1), are modified by the correction values ($Y_R$, $M_R$, $C_R$, $K_R$), and that the corrected colour values ($Y'$, $M'$, $C'$, $K'$) are stored in the storage medium (1) again after completion of the retouching operation.

4. Method according to one of Claims 1 to 3, characterized in that the image dot co-ordinates (x, y) of the colour values (Y, M, C, K) which are to be retouched are determined in a co-ordinate detection device (50, 51, 52) by marking the positionally co-ordinated dots by means of a marking device, in particular a co-ordinate pin (51).

5. Method according to Claim 4, characterized in that the retouching factors (r) are determined from the number of contacts of the corresponding dots with the marking device (51) of the co-ordinate detection device (50, 51, 52), the marking device (51) being swept over the area of the co-ordinate detection device (50, 51, 52) in the manner of a retouching brush, which corresponds to the area of the colour separation which is to be corrected.

6. Method according to Claim 4, characterized in that the retouching factors (r) are determined from the pressure of the marking device (51) on the corresponding dots of the co-ordinate detection device (50, 51, 52).

7. Method according to Claim 4, characterized in that the retouching factors (r) are determined from the period of dwell of the marking device (51) on the corresponding dots of the co-ordinate detection device (50, 51, 52).

8. Method according to Claim 5, characterized in that the retouching factors (r) are increased (retouching reinforcement) or decreased (retouching attenuation) by a quantity, at each contact.

9. Method according to Claim 6, characterized in that the retouching factors (r) are increased during a rise in pressure (retouching reinforcement) and reduced during a drop in pressure (retouching attenuation).

10. Method according to Claim 7, characterized in that the retouching factors (r) are increased (retouching reinforcement) or reduced (retouching attenuation) by a quantity corresponding to the dwell period in question.

11. Method according to one of Claims 4 to 10, characterized in that the unretouched or retouched colour separation is displayed on the picture screen (3) of a monitor (2) for visual control, that a movable light mark (31) is gated into the picture screen (3), and that the displacement of the light mark (31) is synchronized with the displacement of the marking device (51) of the co-ordinates detection device (50, 51, 52).

12. Method according to one of Claims 4 to 10, characterized in that the unretouched or retouched colour picture (original) is displayed on the picture screen (3) of a colour monitor (2) for a visual control that a movable light mark (31) is gated into the picture screen (3), and that the displacement of the light mark (31) is synchronized with the displacement of the marking device (51) of the co-ordinate detection device (50, 51, 52).

13. Method according to one Claims 1 to 12, characterized in that the digital colour values (Y, M, C, K) of the separate colour separations are charges into an image refresh memory (7) from the storage medium (1), and that the image refresh memory (7) is read cyclically for dot-by-dot display on the monitor (2).

14. Method according to one of Claims 2 to 13, characterized in that the retouching factors (r) determined are transferred image dot by image dot into a retouching memory (49), and that the retouching memory (49) is read out synchronously with the image refresh memory (7) for image dot by image dot co-ordination of colour values (Y, M, C, K) and correction values ($Y_R$, $M_R$, $C_R$, $K_R$).

15. Method according to Claim 14, characterized in that the retouching factors (r) modified by the corrective action are in each case transferred into the retouching memory (49) during a blanking interval of the image display operation.

16. Method according to Claim 15, characterized in that the image dot co-ordinates (x, y) of the marked dots are stored tabularly in the sequence of their detection, and that the image dot co-ordinates (x, y) are called up in pairs in reverse order and corresponding retouching factors (r) are modified step by step in the retouching memory (49) for reversal of the retouching performed, step by step and true to outline.

17. Method according to Claim 15, characterized in that the retouching as a whole may be cancelled by erasure of the retouching memory (49).

18. Method according to one of Claims 4 to 17, characterized in that the marking device (51) simultaneously detects the image dot co-ordinates (x, y) of several colour values (Y, M, C, K) which are to be corrected, and that these colour values are modified simultaneously, corresponding to an enlarged brush surface.

19. Method according to Claim 18, characterized in that the enlarged brush surface is indicated by a commensurately enlarged light mark (31).

20. Method according to one of Claims 1 to 19, characterized in that the image area which is to be retouched is delimited by a mask generated electronically.

21. An arrangement for implementation of the method according to one of Claims 1 or 2, comprising a storage medium for the colour values of the individual colour separations, a post-connected image refresh memory and a monitor connected to the image refresh memory for a visual control, characterized by a colour generator (38) for generating the colour increments ($\Delta Y$, $\Delta M$, $\Delta C$, $\Delta K$), a retouching generator (39) for generating the retouching factors (r) for the colour values (Y, M, C, K) which are to be corrected, a correction value generator (40) connected to the colour generator (38) and to the retouching generator (39) for generating the correction values ($Y_R$, $M_R$, $C_R$, $K_R$), an energizing means (42) for the correction value generator (40) for at least one colour separation which does not have to be retouched, an energizing means (41) for the correction value generator (40) for a colour separation which is to be retouched, and by interlinking stages (15, 16, 17, 18) post-connected to the image refresh memory (7) in the colour channels for modification of the colour values by the correction values.

22. An arrangement according to Claim 21, characterized in that the retouching generator (39) comprises a co-ordinate detection device (50, 51, 52) for determining the image dot co-ordinates (x, y) of the colour values which are to be corrected, and evaluator circuit (48) connected to the co-ordinate detection device (50, 51, 52) for generating the retouching factors (r) for each pair of image dot co-ordinates detected, and a retouching memory (49) connected to the evaluator circuit (48).

0 059 705

*Fig.1*

Fig. 2a

Fig. 2b

Fig. 2c

Fig. 3

Fig. 4

vom Koordinaten Steuerhebel 32 oder
Meßstufe 52

zum Korrekturwert – Geber 40

Fig. 5

zu den Addierstufen 15,16,17 u.18

Fig. 6